# EUROPEAN PATENT APPLICATION

(11) **EP 4 155 807 A1**
(43) Date of publication of application: **29.03.2023**
(21) Application number: 21199424.9
(22) Date of filing: 28.09.2021
(51) Int. Cl.: G02B 27/00, F21V 8/00, G02B 27/01

(54) **OPTICAL APPARATUS, MODULES AND DEVICES**

(71) Applicant: Nokia Technologies Oy, 02610 Espoo (FI)
(72) Inventor: JÄRVENPÄÄ, Toni Johan, 37800 Akaa (FI); SALMIMAA, Marja Pauliina, 33610 Tampere (FI)
(74) Representative: Nokia EPO representatives

(57) **Abstract**

Examples of the disclosure relate to optical apparatus, modules and devices. The apparatus comprises; at least one light guiding means comprising at least; in-coupling diffractive means configured to in-couple one or more input beams of light into the light guiding means from a light engine, expanding means configured to expand the one or more input beams of light, and out-coupling diffractive means configured to out-couple the one or more expanded beams of light from the light guiding means. The at least one light guiding means is configured to provide a first virtual image in a first location to provide images for a head-up display and is configured to provide a second virtual image in a second location to provide images for a control panel.

## Description

### TECHNOLOGICAL FIELD

Examples of the disclosure relate to optical apparatus, modules and devices. Some relate to optical apparatus, modules and devices for providing images within a vehicle such as an automobile or an aircraft.

### BACKGROUND

Vehicles such as automobiles or aircraft comprise control panels that a user needs to look at while they are controlling the vehicle. Such vehicles can also comprise head-up displays that allow a user to look at the displayed information without looking away from the environment around the vehicle.

### BRIEF SUMMARY

According to various, but not necessarily all, examples of the disclosure there is provided an apparatus comprising: at least one light guiding means comprising at least; in-coupling diffractive means configured to in-couple one or more input beams of light into the light guiding means from a light engine, expanding means configured to expand the one or more input beams of light, and out-coupling diffractive means configured to out-couple the one or more expanded beams of light from the light guiding means; wherein the at least one light guiding means is configured to provide a first virtual image in a first location for a head-up display and is configured to provide a second virtual image in a second location for a control panel.

The at least one light guiding means may comprise a first portion configured to provide the first virtual images for the head-up display and a second portion configured to provide the second virtual images for the control panel.

The first portion of the at least one light guiding means may comprise a first expanding means and a first out-coupling diffractive means and the second portion of the at least one light guiding means comprises a second expanding means and a second out-coupling diffractive means.

The at least part of the at least one light guiding means may be transparent and may be provided overlaying at least part of a control panel.

The at least one light guiding means may be configured to display virtual images at a longer focal distance than the focal distance of images on the control panel and/or a focal distance to the control panel.

The apparatus may comprise one or more moveable components configured to enable a position of the first virtual image and/or the second virtual image provided by the apparatus to be adjusted.

The apparatus may comprise a plurality of light guiding means arranged in a stacked configuration.

The apparatus may comprise at least two reflectors where a first reflector is configured to reflect images from the light guiding means to provide images for the head-up display and a second reflector is configured to reflect images from the light guiding means to provide images for the control panel.

The apparatus may be configured to enable a windshield to be used as a first reflector.

The apparatus may comprise a light engine and the apparatus is configured so that the same light engine provides images both for the head-up display and the control panel.

The second virtual image and the first virtual image may comprise a shared region of an image.

According to various, but not necessarily all, examples of the disclosure there is provided an apparatus comprising: at least one light guide comprising at least; in-coupling diffractive elements configured to in-couple one or more input beams of light into the light guide from a light engine, one or more expanders configured to expand the one or more input beams of light, and out-coupling diffractive elements configured to out-couple the one or more expanded beams of light from the light guide; wherein the at least one light guide is configured to provide a first virtual image in a first location to provide images for a head-up display and is configured to provide a second virtual image in a second location to provide images for a control panel.

According to various, but not necessarily all, examples of the disclosure there is provided a module, a device, a vehicle or cab for a vehicle comprising an apparatus as described herein.

### BRIEF DESCRIPTION

Some examples will now be described with reference to the accompanying drawings in which:
FIG. 1 shows an example light guiding means;
FIG. 2 shows an example apparatus;
FIG. 3 shows an example apparatus in use;
FIGS. 4A and 4B show an example apparatus in use;
FIGS. 5A and 5B show an example light guiding means;
FIGS. 6A to 6C show an example apparatus in use;
FIGS. 7A to 7C show an example apparatus in use;
FIGS. 8A to 8C show an example apparatus in use;
FIGS. 9A to 9C show an example apparatus in use;
FIG. 10 shows an example apparatus in use;
FIGS. 11A to 11C show an example apparatus in use; and
FIG. 12 shows an example apparatus in use.

### DETAILED DESCRIPTION

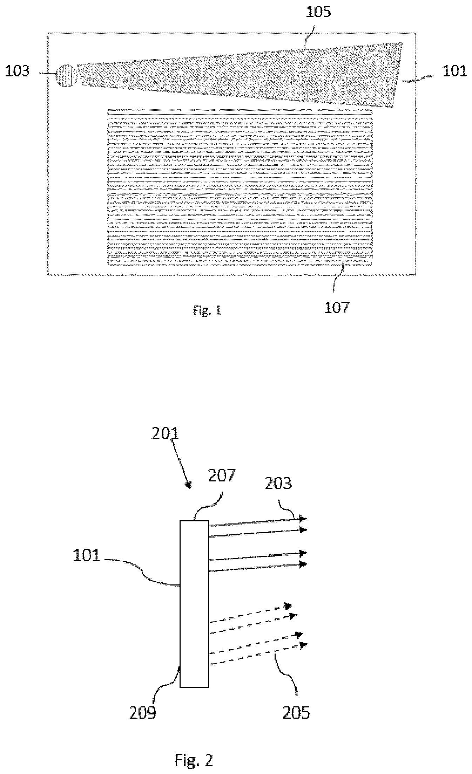

Fig. 1 shows an example light guiding means 101 that can be used in examples of the disclosure. The light guiding means 101 can be formed on a waveguide, an optical substrate, a transparent plate or any other suitable material.

In this example the light guiding means 101 comprises an exit pupil expander. The exit pupil expander is configured to increase the size of an exit pupil from a light engine or other optical arrangement. The light engine could be a display means such as a projection engine.

The light guiding means 101 comprises in-coupling diffractive means 103, expanding means 105, and out-coupling diffractive means 107.

The in-coupling means 103 comprise any means that is configured to in-couple one or more beams of light from a light engine into the light guiding means 101. The in-coupling means 103 is positioned within the light guiding means 101 so that, in use, the in-coupling means 103 can be positioned adjacent to the light engine.

The in-coupled beam of light travels though the light guiding means 101 via total internal reflection. The refractive index of the material that is used for the light guiding means 101, the wavelength of the in-coupled beam, and the parameters of the in-coupling diffractive means 103 determine the total internal reflection angles.

The expanding means 105 is positioned within the light guiding means 101 so that the in-coupled beam of light is provided from the in-coupling means 103 to the expanding means 105.

The expanding means 105 comprise any means that is configured to expand the in-coupled beam of light in at least one dimension. The expanding means 105 can comprise a diffractive means such as a diffraction grating or any other suitable means. In the diffraction grating the in-coupled beam of light is split into two with every internal reflection. The two split sections of the beam travel in different directions and continue splitting and so expand the exit pupil of the light engine. In the example shown in Fig. 1 the expanding means 105 has a grating which expands the beam in a horizontal direction.

The out-coupling diffractive means 107 is positioned within the light guiding means 101 so that the horizontally expanded beam of light is provided from the expanding means 105 to the out-coupling diffractive means 107.

The out-coupling diffractive means 107 comprises any means that is configured to out-couple the horizontally expanded light beam out of the light guiding means. The out-coupling diffractive means 107 can function in a similar manner to the expanding means 105 so that the expanded beam of light is split into two with every internal reflection. The out-coupling diffractive means 107 can also be configured to expand the horizontally expanded beam of light in a second dimension. In the example shown in Fig. 1 the out-coupling diffractive means 107 has a horizontal grating which expands the horizontally expanded beam in the vertical direction.

The light guiding means 101 is configured so that the out-coupled expanded beam of light can be viewed by a user. The out-coupled expanded beams of light provide a virtual image that can be observed by a user. The out-coupled beam of light therefore provides an expanded exit pupil.

It is to be appreciated that the variations in the size, shape, position, and expansion direction of the different diffractive means are examples and that other variations could be used in other examples of the disclosure. For example, the expanding means 105 could expand the light beam in some other direction than horizontal. As another example, the out-coupling means 107 could expand the beam in some other direction than vertical. As a third example, the exit pupil of the beam of light in-coupled by the in-coupling means 103 would be expanded in the first expansion dimension already prior to in-coupling the beam into the light guiding means 101. In this example there would be no expanding means 105 positioned within the light guiding means 101.

The diffractive means that are used for the in-coupling diffractive means 103, expanding means 105, and out-coupling diffractive means 107 can comprise any means that can be configured to diffract the input beams of light. The diffractive means can comprise any one or more of a diffractive optical element, diffractive structure, diffraction gratings, holographic gratings, Bragg gratings, rulings, ridges, surface relief diffractive gratings or any suitable optical component or feature having a periodic structure that splits and diffracts light into several beams travelling in different directions.

Fig. 2 schematically shows a side view of an example apparatus 201. The apparatus 201 can be provided within a vehicle or a cab of a vehicle. For instance, the apparatus 201 could be provided within a car or other type of automobile. In some examples the apparatus 201 could be provided within an aircraft such as an aeroplane. In some examples the apparatus 201 could be provided within a cab that can be attached to a vehicle or machinery. For instance, the apparatus 201 could be provided within a cab that could be coupled to a digger or crane.

The apparatus 201 comprises at least one light guiding means 101. The light guiding means 101 could comprise an in-coupling diffractive means 103, one or more expanding means 105 and one or more out-coupling diffractive means 107. The in-coupling diffractive means 103 can be configured to in-couple one or more input beams of light into the light guiding means 101 from a first light engine. The expanding means 105 can be configured to expand the one or more input beams of light. The out-coupling diffractive means 107 can be configured to out-couple the one or more expanded beams of light from the light guiding means 101.

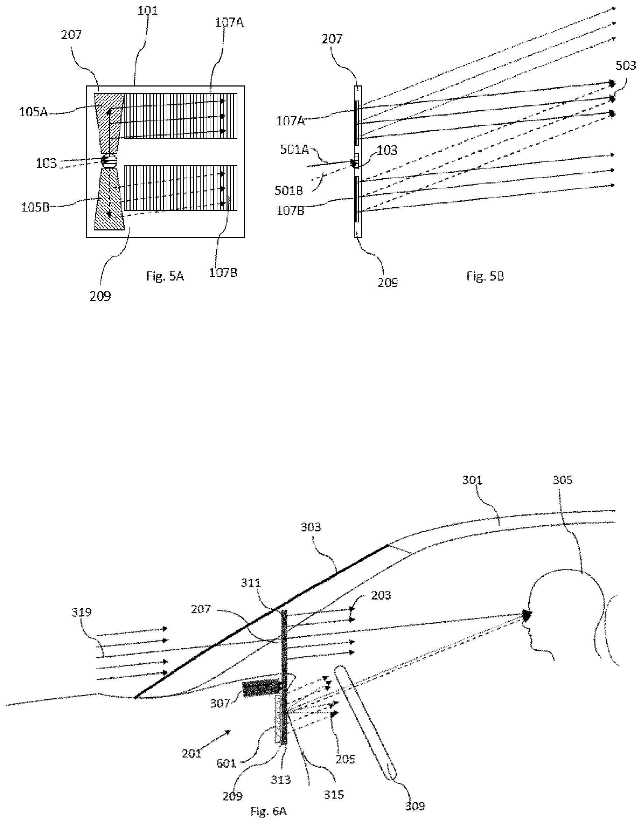

An example lay out for the in-coupling diffractive means 103, expanding means 105 and out-coupling diffractive means 107 is shown in Figs. 5A and 5B. This example shows a single in-coupling diffractive means 103 and two expanding means 105A and 105B and two out-coupling diffractive means 107A and 107B. Other arrangements of the in-coupling diffractive means 103, expanding means 105 and out-coupling diffractive means 107 could be used in other examples of the disclosure.

The light guiding means 101 is configured to provide a first virtual image 203 in a first location and to provide a second virtual image 205 in a second location. The light guiding means 101 can be configured so that the first images 203 are images for a head-up display (HUD) while the second images 205 are images for a control panel.

The light guiding means 101 can be provided as a single component. The light guiding means 101 can be provided on a single substrate or plate. The same light guiding means 101 therefore can provide both the images 203 for the HUD and the images 205 for the control panel.

In the example of Fig. 2 the light guiding means 101 comprises a first portion 207 and a second portion 209. The first portion 207 and the second portion 209 comprise different areas of the same substrate or plate. In the example of Fig. 2 the light guiding means 101 is provided in a vertical, or substantially vertical, orientation. In this orientation the first portion 207 is provided above the second portion 209. Other orientations and arrangements could be used in other examples of the disclosure.

In the example of Fig. 2 the light guiding means 101 is configured so that each of the first images 103 and the second images 105 are provided from the same side of the light guiding means 101. The first images 103 and the second images 105 are provided from the same surface of the substrate that provides the light guiding means 101. Other configurations for the light guiding means 101 could be used in other examples of the disclosure.

The first portion 207 can be configured to project images to a first location and the second portion 209 can be configured to project images to a second, different location. The first portion 207 can be configured to provide the first images 203 for a HUD and the second portion 209 can be configured to provide the second images 205 for a control panel. The first location can therefore be a location that the driver or controller of a vehicle can view without looking away from their environment and the second location can be a location within the dashboard area of the vehicle.

The HUD can be positioned within a vehicle so that the driver or controller of the vehicle can view the HUD without having to look away from the environment around the vehicle. The HUD can be positioned within a vehicle so that when a driver or controller is controlling the vehicle the HUD is located in front of the driver or controller. The HUD can be located behind a steering wheel. The HUD can be located above a dashboard of a vehicle. The first portion 207 of the light guiding means 101 can be configured to project the first images to 203 to a suitable location for the HUD.

When the apparatus 201 is in use the HUD can also be configured to provide information relating to the function of a vehicle associated with the HUD. For instance, the information that is displayed by the first images 203 could relate to the speed of the vehicle, a current operating mode of the vehicle, the location of the vehicle, a fuel status of the vehicle, information from a reversing camera or any other suitable type of information. In some examples the HUD can be configured to provide mediated reality information such as augmented reality information. The augmented reality information could be provided to help the driver or controller to control the vehicle or for any other suitable purpose.

The control panel can be positioned within a vehicle so that when a driver or controller is controlling the vehicle the control panel is located in front of the driver or controller. The control panel can be located behind a steering wheel. The control panel can be located in a dashboard of a vehicle. The control panel can be located beneath a windshield of the vehicle. The second portion 209 of the light guiding means 101 can be configured to project the second images 205 to a suitable location for the control panel.

When the apparatus 201 is in use the control panel can comprise any means that can be configured to provide information relating to the function of a vehicle associated with the control panel. For instance, the information that is displayed by the control panel could relate to the speed of the vehicle, a current operating mode of the vehicle, the location of the vehicle, a fuel status of the vehicle, information from a reversing camera or any other suitable type of information. The second images 205 that are provided by the light guiding means 101 can therefore comprise information relating to the function of the vehicle.

In some examples the first images 203 provided by the light guiding means 101 can comprise some of the same information comprised within the second images 205 provided by the light guiding means 101. For instance the first images 203 and the second images 205 could comprise one or more shared regions of an original or full image. In some such examples the HUD can display a subset of the information displayed by the control panel and/or the control panel can display a subset of the information displayed by the HUD. In other examples the first images 203 and the second images 205 could comprise different information.

In the example shown in Fig. 2 the apparatus 101 comprises a single light guiding means 101. In other examples the apparatus 101 could comprise a plurality of light guiding means 101. The plurality of light guiding means 101 could be arranged in a stacked configuration. The stacked configuration of the light guiding means 101 can help to control the brightness or colours within the virtual images 203, 205 provided by the apparatus 201. In examples where the apparatus 201 comprises a plurality of light guiding means 101 the plurality of light guiding means 101 can be configured to multiplex colours of the virtual images, to multiplex the focal distances of the virtual images, to control the field of view of the virtual images, to control parameters of the exit pupils and/or to control any other features.

The apparatus 201 can comprise additional components that are not shown in Fig. 2. For instance, the apparatus 201 can comprise means for adjusting the positions in which the first images 203 and the second images 205 are provided. The means could be configured to enable the light guiding means 101 to be tilted. This tilting of the light guiding means 101 can be used to adjust the height at which the first images 203 and the second images 205 are provided. In some examples the means for adjusting the positions in which the first images 203 and the second images 205 are provided could be manual. In such examples the adjusting of the positions of the images 203, 205 could occur in response to one or more user inputs. In some examples the means for adjusting the positions in which the first images 203 and the second images 205 are provided could be automatic. In these examples the adjusting of the positions of the images 203, 205 could occur without any specific user input. For instance, the adjusting of the positions of the images 203, 205 could occur in response to an input other than a user input, such as the detection of the height of the driver or controller of the vehicle.

In some examples the apparatus 201 can comprise means for adjusting the focal distance of the virtual images 203, 205 provided by the apparatus 201. In some examples the focal distance of the virtual images could be adjusted by adjusting the light guiding means 101. In such examples one or more optical components could be provided and used to adjust the focal distance of the light guiding means 101. The optical components could comprise one or more lenses or any other suitable components. The means for adjusting the focal distances of the images can enable the focal distance of the first images 203 to be adjusted separately to the focal distances of the second images 205. This can enable the first images 203 provided by the HUD to have a different focal length to the second images 205 provided by the control panel.

In some examples the focal distance of the virtual images could be adjusted by using different light guiding means 101. For instance, the apparatus 201 could comprise a plurality of light guiding means 101 where different light guiding means 101 provide virtual images at different focal distances. The apparatus 201 could be configured to enable different light guiding means 101 to be selected as appropriate.

The different focal distances of the virtual images 203, 205 could be selected for any suitable reason. For instance, the different focal distances could be selected to account for drivers or controllers preferences. In some examples the means for adjusting the focal distance of the apparatus 201 could be manual. In such examples the adjusting of the focal distance could occur in response to one or more user inputs. In some examples the means for adjusting of the focal distance of the apparatus 201 could be automatic. In such examples the adjusting of the focal distance could occur without any specific user input. In such examples the adjusting of the focal distance could occur in response to an input other than a user input, such as the detection of the environment.

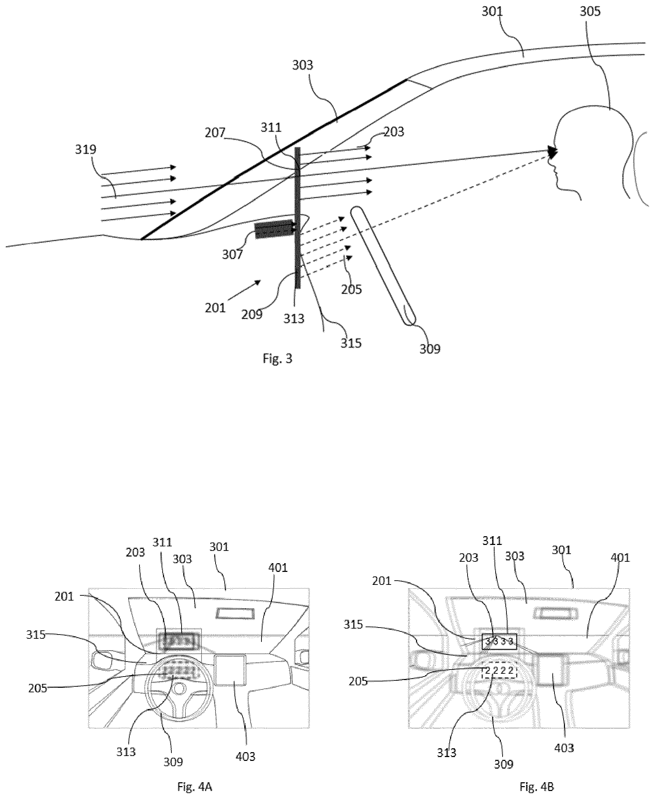

Fig. 3 shows an example apparatus 201 in a vehicle 301. In this example the apparatus 201 is provided within a car. In other examples the apparatus 201 could be used in other vehicles or aircraft or cabs for vehicles.

In the example of Fig. 3 the apparatus 201 comprises a light guiding means 101 configured to provide first images 203 for a HUD 311 and second images 205 for a control panel 313.

The light guiding means 101 is coupled to a light engine 307. The light engine 307 can comprise a projector or any other suitable means. The light engine 307 can be configured to provide images to the in-coupling diffractive means 103 of the light guiding means 101. The light engine 307 can be controlled to control the images that are displayed by the light guiding means 101.

The apparatus 201 is configured so that the same light engine 307 provides first images 203 for the HUD 311 and also second images 205 for the control panel 315. In other examples the apparatus 201 could comprise more than one light engine 307 so that different light engines 307 could provide the first images 203 and the second images 205. The first images 203 and the second images 205 can partially or fully comprise the same image content. As an example, the first images 203 for the HUD 311 could comprise augmented reality information appearing to overlay real world objects, while the second images 205 could comprise of the same augmented reality information and also of additional images of the real-world objects captured using a front facing camera.

The light guiding means 101 comprises a first portion 207 and a second portion 209. In this example the first portion 207 is configured to provide the first images 203 for the HUD 311 and the second portion 209 is configured to provide the second images 205 for the control panel 313.

In the example of Fig. 3 the light guiding means 101 is provided in a vertical or substantially vertical orientation. In this orientation the first portion 207 is provided above the second portion 209 so that the first images 203 from the HUD 313 are provided above the second images 205 for the control panel 313.

In the example of Fig. 3 the first portion 207 of the light guiding means 101 extends above the dashboard 315 of the vehicle 301. This enables the first portion 207 to be positioned between the driver 305 and the windshield 303 so that the first portion 207 can provide images 203 for the HUD 311. The driver 305 can view the HUD 311 without looking away from the windshield 303 or from the environment that they can view through the windshield 303. The arrows 319 represent the sections of the environment that are being viewed by the driver 305 through the windshield 303.

In the example of Fig. 3 the second portion 209 of the light guiding means 101 is provided within the dashboard 315 of the vehicle 301. The second portion 209 of the light guiding means 101 is provided behind the steering wheel 309 of the vehicle 301. The second portion 209 of the light guiding means 101 is positioned so that a driver 305 of the vehicle 301 can view the control panel 313 through the steering wheel 309. The driver 305 might need to adjust their head position or the direction in which they are looking to view the information displayed on the second portion 209 of the light guiding means 101.

In some examples a protective shield or screen could be provided over the second portion 209 of the light guiding means 101. This can be configured to protect the second portion 209 of the light guiding means 101 from damage. This can also help a driver to distinguish between the first portion 207 and the second portion 209 of the light guiding means 101. In other examples the apparatus 201 could be configured so that a single continuous surface of the light guiding means 101 is provided within the vehicle 301.

In the example of Fig. 3 the light guiding means 101 comprises a flat, or substantially flat, substrate. In other examples the light guiding means 101 could comprise a curved or partially curved substrate.

Figs. 4A and 4B show the example apparatus 201 of Fig. 3 in use. The apparatus 201 is provided within a vehicle 301 and positioned behind the steering wheel 309 to provide a HUD 311 and a control panel 313. The vehicle 301 also comprises an auxiliary control panel 403. The auxiliary control panel 403 is mounted on the dashboard 315 to the side of the steering wheel 309.

In this example the light guiding means 101 is configured to provide the images 203, 205 in a mid-range focal distance or in a long-range focal distance. The focal distance of the images 203, 205 provided by the light guiding means 101 can be aligned with the focal distances of objects in the environment 401 around the vehicle 301 or with an expected focal range that the driver 305 might be looking at.

In this example both the first images 203 provided for the HUD 311 and the second images 205 provided for the control panel 313 are provided in a mid-range focal distance or in a long-range focal distance. In this example the first images 203 provided for the HUD 311 and the second images 205 provided for the control panel 313 can have the same, or substantially the same, focal distance.

Providing the first images 203 for the HUD 311 and the second images 205 for the control panel 313 with a long or mid-range focal distance enables the driver 305 of the vehicle 301 to easily view both objects in the environment 401 around the vehicle 301 and also information displayed by the HUD 311 and the control panel 313 without having to adjust the focus of their eyes. The adjusting of the focus of their eyes can take some time. This inherent latency can make it difficult for the driver 305 to interpret visual signals and can increase the risk of accidents occurring. Removing the need for making this adjustment can help therefore the driver 305 to identify hazards when they change between viewing the information from the HUD 311 and/or the control panel 313 and viewing the environment 401 around the vehicle 301.

Fig. 4A shows how the apparatus 201 and the images 203, 205 provided by the apparatus 201 appear when the driver 305 focusses their eyes to a near focal point.

In the example of Fig. 4A the environment 401 around the vehicle 301 appears out of focus. The virtual images 205, 203 displayed by the light guiding means 101 are also out of focus.

The auxiliary control panel 403 is positioned close to the driver 305 and so would be in focus. The auxiliary control panel 403 is provided to the side of the steering wheel 309 and can be configured to display navigation information or other suitable types of information.

Fig. 4B shows how the apparatus 201 and the images 203, 205 provided by the apparatus 201 appear when the driver 305 focusses their eyes to a far focal point.

In the example of Fig. 4B the environment 401 around the vehicle 301 appears in focus. The virtual images 205, 203 displayed by the light guiding means 101 are also in focus. This enables the driver 305 to switch between viewing the environment 401 and viewing the virtual images 205, 203 without having to refocus their eyes.

In the example of Figs. 4A and 4B the information displayed in the first image 203 is different to the information displayed in the second image 205. This can enable the HUD 311 to provide different information to the control panel 313. In other examples the first image 203 could comprise some of the same information displayed in the second image 205. This allows for an overlap of the information provided in the two images 203, 205.

Figs. 5A and 5B show an example layout for a light guiding means 101 that can be used in some examples of the disclosure. Fig. 5A shows a front view of the example light guiding means 101 and Fig. 5B shows a side view of the light guiding means 101.

In the example of Figs. 5A and 5B the light guiding means 101 comprises an in-coupling diffractive means 103, two expanding means 105A, 105B and two out-coupling diffractive means 107A, 107B.

The in-coupling diffractive means 103 is positioned between the two expanding means 105A, 105B so as to provide a symmetrical, or a substantially symmetrical, arrangement. The in-coupling diffractive means 103 is provided in a central position within the light guiding means 101. The first expanding means 105A is provided in a first portion 207 of the light guiding means 101 and the second expanding means 105B is provided in a second portion 209 of the light guiding means 101. In the example the first portion 207 comprises an upper portion of the light guiding means 101 and the second portion 209 comprises a lower portion. In this example the first portion 207 and the second portion 209 comprise different parts of the same substrate.

The first expanding means 105A is positioned adjacent to a first out-coupling diffractive means 107A. The first out-coupling diffractive means 107A is also provided in the first portion 207 of the light guiding means 101. The second expanding means 105B is positioned adjacent to a second out-coupling diffractive means 107B. the second out-coupling diffractive means 107B is also provided in the second portion 209 of the light guiding means 101.

In the example of Figs. 5A and 5B the first expanding means 105A and the second expanding means 105B have the same, or substantially the same, shapes and sizes. The first out-coupling diffractive means 107A and the second out-coupling diffractive means 107B also have the same, or substantially the same, shapes and sizes. This can provide a symmetrical, or a substantially symmetrical, light guiding means 101. Other configurations for the light guiding means 101 could be used in other examples, for instance, the respective expanding means 105 and out-coupling diffractive means 107 do not need to be the same size and shape and the lay out does not need to be symmetrical or substantially symmetrical.

The example light guiding means 101 shown in Figs. 5A and 5B can be used in apparatus 201 as shown in Figs. 2-4A and 6 to 12. In such examples the first expanding means 105A and first out-coupling diffractive means 107A can be configured to provide the first images 203 for the HUD 311. The second expanding means 105B and second out-coupling diffractive means 107B can be configured to provide the second images 205 for the control panel 313. Other examples of light guiding means 101 could be provided in other examples of the disclosure.

In some examples the light guiding means 101 can be configured so that the position at which an image is displayed by the light guiding means 101 is dependent upon the angle at which a beam of light is provided to the in-coupling diffractive means 103. This can enable different beams of light to take different paths through the light guiding means 101 to the user's eye. The angular dependency of the light guiding means 101 can be determined by the parameters of the diffractive means that provide the in-coupling diffractive means 103, the expanding means 105A, 105B and the out-coupling diffractive means 107A, 107B. The parameters could be the grating period of the diffraction gratings, refractive indices of the substrate and grating materials, or any other suitable parameters.

An example of the angular dependency and the different paths that can be taken by the different beams of light is shown in Fig. 5B. In this example a first beam of light 501A is provided at a first angle and a second beam of light 501B is provided at a second, different angle. The first angle is different to the second angle. The first beam of light 501A is shown as a solid line and the second beam of light 501B is shown as a dashed line.

The first beam of light 501A passes through the light guiding means 101 and exits through both of the the out-coupling diffractive means 107A, 107B at a first angle. This allows images that are provided by the first beam of light 501A to pass through the first expanding means 105A and first out-coupling diffractive means 107A to be provided at a first location 503 corresponding to a user's eye. The second beam of light 501B passes through the light guiding means 101 and exits through both of the the out-coupling diffractive means 107A, 107B at a second angle. This allows images that are provided by the second beam of light 501B to pass through the second expanding means 105B and second out-coupling diffractive means 107B to also be provided at the first location 503 corresponding to a user's eye. Therefore, the example light guiding means 101 can provide two different paths for light to reach the same point.

In the example of Figs. 5A and 5B the different portions 207, 209 of the light guiding means 101 are the same, or substantially the same size. In other examples the different portions 207, 209 of the light guiding means 101 could have different sizes.

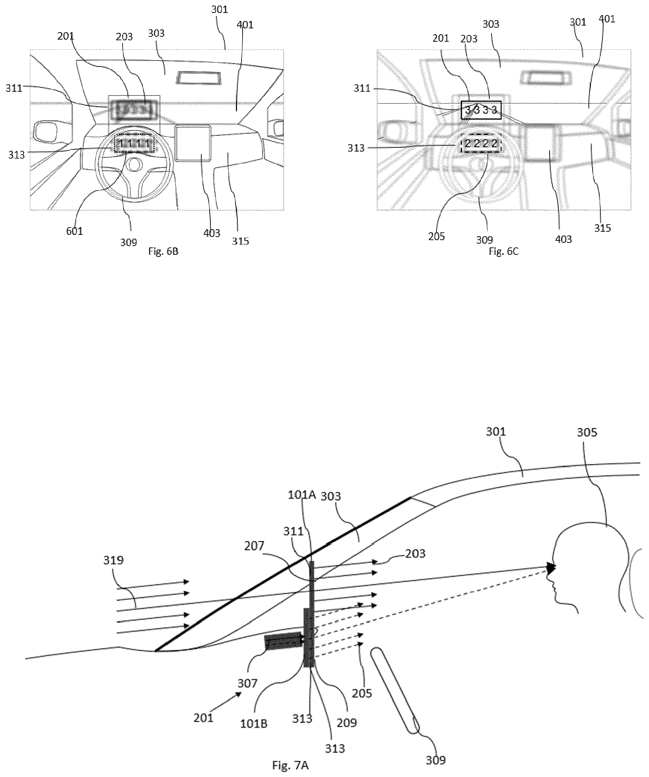

Fig. 6A shows another example apparatus 201 positioned within a vehicle 301. Figs. 6B and 6C show the example apparatus 201 in use. In this example the apparatus 201 is provided within a car. In other examples the apparatus 201 could be used in other vehicles or aircraft or cabs for vehicles.

In this example the apparatus 201 comprises a light guiding means 101 and a light engine 307. The light guiding means 101 comprises a first portion 207 and a second portion 209. The first portion 207 is configured to provide images 205 for the HUD 311 and the second portion 209 is configured to provide images 205 the control panel 313.

In the example of Fig. 6A the light guiding means 101 is positioned so that the second portion 209 of the light guiding means 101 overlays at least part of a control panel 203. In some examples the light guiding means 101 could overlay all of the control panel 601.

The control panel 601 can comprise any means that can be configured to provide information relating to the function of a vehicle associated with the control panel 601. For instance, the control panel 601 could comprise one or more gauges or other means for displaying information. The information that is displayed by control panel 601 could relate to the speed of the vehicle, a current operating mode of the vehicle, the location of the vehicle, a fuel status of the vehicle, information from a reversing camera or any other suitable type of information. The control panel 601 can be configured to display some of the information displayed by the control panel 313 or can be configured to display different information.

The light guiding means 101 can be transparent. The light guiding means 101 can be transparent so that the control panel 601, or at least part of the control panel 601, can be viewed through the second portion 209 of the light guiding means 101, and the environment around the vehicle can be viewed through the first portion 207.

In some examples the light guiding means 101 can be positioned so that the second portion 209 of the light guiding means 101 is in contact with a surface of the control panel 601. In such examples the second portion 209 of the light guiding means 101 can be provided directly overlaying the control panel 601 so that no gap is provided between the control panel 601 and the second portion 209 of the light guiding means 101. In other examples a gap could be provided between the control panel 601 and the second portion of the light guiding means 101.

The light guiding means 101 can be configured so that the virtual images 205 provided by the second portion 209 of the light guiding means 101 are displayed at a longer focal distance than the control panel 601 or images displayed on the control panel 601. As shown in Fig. 6A the control panel 601 is positioned at a given distance from the driver 305. This may be within a short focal range. The virtual images 205 that are displayed by the second portion 209 of the light guiding means 101 can be in a longer focal range. The virtual images 205 that are displayed by the second portion 209 of the light guiding means 101 can be in a mid-range focal distance or in a long-range focal distance. In such examples the focal distance of the light guiding means 101, or the second portion 209 of the light guiding means 101, is set to a far or middle distance. For instance, a curved light guiding means 101 could be used or optical components such as lenses could be used to adjust the focal distance of a flat light guiding means 101. In some examples the virtual images 205 that are displayed by the second portion 209 of the light guiding means 101 can be focused at infinity. In such examples the focal distance of the one light guiding means 101, or the second portion 209 of the light guiding means 101, is set to infinity. For instance, a flat light guiding means 101 could be used.

Fig. 6B shows how the apparatus 201 of Fig. 6A and the images 203, 205 provided by the apparatus 201 appear when the driver 305 focusses their eyes to a near focal point.

In the example of Fig. 6B the environment 401 around the vehicle 301 appears out of focus. The virtual images 203, 205 displayed by the light guiding means 101 are also out of focus. However, the control panel 601 appears in focus. In this example the control panel 601 is displaying the digits 1111. The control panel 601 can be viewed through the second portion 209 of the light guiding means 101. The auxiliary control panel 403 also appears in focus.

Fig. 6C shows how the apparatus 201 of Fig. 6A and the images 203, 205 provided by the apparatus 201 appear when the driver 305 focusses their eyes to a far focal point.

In the example of Fig. 6C the environment 401 around the vehicle 301 appears in focus. The virtual images 203, 205 displayed by the light guiding means 101 are also in focus. This enables the driver 305 to switch between viewing the environment 401 and viewing the virtual images 205, 203 without having to refocus their eyes.

In the example of Figs. 6B and 6C the information displayed in the images 203, 205 provided by the apparatus 201 can be different to the information displayed on the control panel 601. This can enable a larger range of information to be provided to the driver 305 and/or can enable the driver to select different formats for the information to be presented in.

In some examples the focal distance of the images 203, 205 provided by the apparatus 201 can be adjusted to be aligned with the distance of one or more objects within the environment 401 around the vehicle 301. For instance, if a hazard object is detected, the distance between the hazard object and the vehicle 301 could be estimated. The apparatus 201 could then be configured so that the focal distance of the images 203, 20 provided by the apparatus 201 are aligned with the distance at which the hazard object is located.

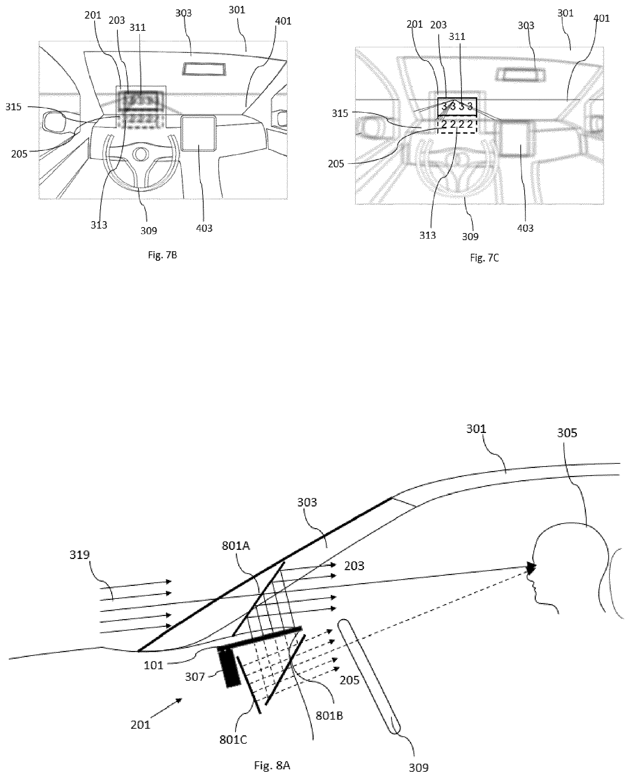

Fig. 7A shows another example apparatus 201 positioned within a vehicle 301. Figs. 7B and 7C show the example apparatus 201 in use. In this example the apparatus 201 is provided within a car. In other examples the apparatus 201 could be used in other vehicles or aircraft or cabs for vehicles.

In this example of Fig. 7A the apparatus 201 comprises a plurality of a light guiding means 101 and a light engine 307. In the example of Fig. 7A the apparatus 201 comprises two light guiding means 101. Other numbers of light guiding means 101 can be provided in other examples of the disclosure.

The plurality of light guiding means 101 are arranged in a stacked configuration. The plurality of the light guiding means 101 are stacked so that at least part of a first light guiding means 101A overlays at least part of a second light guiding means 101B. The stacking of the plurality of light guiding means 101 can be configured to enable colour multiplexing, wavelength multiplexing, exit pupil multiplexing or for any other suitable purpose. In this example the stacking of the light guiding means 101 can be configured to enable a two-part image to be provided where the different parts of the image are provided by beams of light that have travelled through the different light guiding means 101.

In the example of Fig. 7A the first light guiding means 101A comprises a first portion 207 and a second portion 209. The first portion 207 is configured to provide images 205 for the HUD 311 and the second portion 209 is configured to provide images 205 the control panel 313. In this example the second portion 209 overlays, at least part of, the second light guiding means 101B.

Each of the first light guiding means 101A and the second light guiding means 101B can comprise an in-coupling diffractive means 103, one or more expanding means 105 and one or more out-coupling diffractive means 107. The in-coupling diffractive means 103, one or more expanding means 105 and one or more out-coupling diffractive means 107 can be arranged in any suitable layout.

In the example of Fig.7A the first light guiding means 101A and the second light guiding means 101B are configured to enable two-part virtual images to be provided. The first part of the virtual image 203 can provide images for the HUD 311 and the second part of the virtual image 205 can provide images for the control panel.

Fig. 7B shows how the apparatus 201 of Fig. 7A and the images 203, 205 provided by the apparatus 201 appear when the driver 305 focusses their eyes to a near focal point.

In the example of Fig. 7B the environment 401 around the vehicle 301 appears out of focus. The virtual images 203, 205 displayed by the light guiding means 101 are also out of focus. In this example the virtual images 203, 205 are provided as two parts of the same image.

In this example the auxiliary control panel 403, which is located next to the steering wheel 309, also appears in focus.

Fig. 7C shows how the apparatus 201 of Fig. 7A and the images 203, 205 provided by the apparatus 201 appear when the driver 305 focusses their eyes to a far focal point.

In the example of Fig. 7C the environment 401 around the vehicle 301 appears in focus. The virtual images 203, 205 displayed by the light guiding means 101 are also in focus. This enables the driver 305 to switch between viewing the environment 401 and viewing the virtual images 205, 203 without having to refocus their eyes.

In the examples of Figs. 7A to 7C the two apparatus 201 can be configured so that the parts of the virtual image can be configured to provide different information. For instance, the first part of the image provides the image 203 for the HUD 311 and the second part of the image provides the image 205 for the control panel 313.

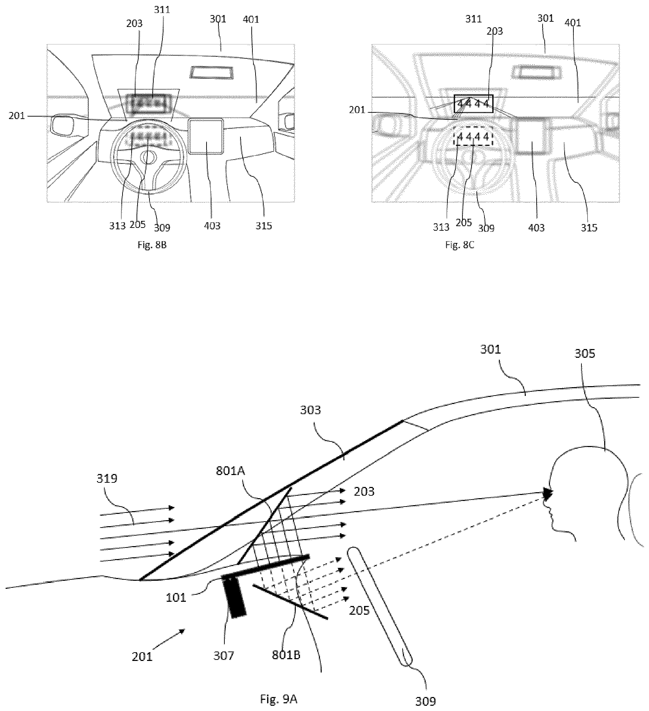

Fig. 8A shows another example apparatus 201 positioned within a vehicle 301. Figs. 8B and 8C show the example apparatus 201 in use. In this example the apparatus 201 is provided within a car. In other examples the apparatus 201 could be used in other vehicles or aircraft or cabs for vehicles.

In the example of Fig. 8A the apparatus 201 comprises a light guiding means 101 and a light engine 307. In the example of Fig. 8A the light guiding means 101 is provided in a horizontal, or substantially horizontal orientation. The light guiding means 101 is configured so that a first surface of the light guiding means 101 faces in a generally upwards direction and a second surface of the light guiding means 101 faces in a generally downwards direction.

In this example the apparatus 201 also comprises a plurality of reflectors 801. The reflectors 801 are configured so that beams of light that have passed through the light guiding means 101 are incident on the plurality of reflectors 801 and are reflected, or at least partially reflected, towards the driver 305.

The reflectors 801 can comprise one or more mirrors or any other suitable reflective means. The reflectors 801 can be transparent or partially transparent. The reflection parameters of the reflectors 801 can be optimized, or substantially optimized, for the wavelengths of light that are provided from the light guiding means 101. The reflection parameters of the reflectors 801 can be optimized, or substantially optimized, for the polarization directions of light that are provided from the light guiding means 101. The reflectors 801 can be flat or comprise one or more curved surfaces with optical power.

In the example of Fig. 8A the apparatus comprises a first reflector 801A, a second reflector 801B and a third reflector 801C. The first reflector 801A is configured to reflect incident beams of light from the light guiding means 101 towards the driver 305 so as to provide first images 203 for the HUD 311. In this example the first reflector 801A is provided between the light guiding means 101 and the wind shield 303. The first reflector 801A is provided above the light guiding means 101. The first reflector 801A is configured so that the first images 203 are provided at the eye level of the driver 305 or close to the eye level of the driver 305.

The second reflector 801B and a third reflector 801C are configured to reflect incident beams of light from the light guiding means 101 towards the driver 305 so as to provide second images 205 for the control panel 313. In this example the second reflector 801B is positioned underneath the light guiding means 101 so that light from the light guiding means 101 is incident on the second reflector 801B and is reflected towards the third reflector 801C. The third reflector 801C is also positioned underneath the light guiding means 101. The third reflector 801C is positioned so that light from the second reflector 801B is incident on the third reflector 801C and is directed towards the driver 305 to provide the second image 205 for the control panel 313. The reflectors 801B and 801C can be polarization sensitive, or separate polarization filters can be attached for controlling polarization states of the reflected and transmitted light.

In this example the light guiding means 101 is configured so that light is emitted from both the upper surface and the lower surface. The light emitted from the upper surface is incident on the first reflector 801A and the light emitted from the lower surface is incident on the second reflector 801B. The images provided by the light emitted from the lower surface provides an inverted image compared to the images provided by the light emitted from the upper surface. The second reflector 801B and the third reflector 801C are therefore configured to correct the inverted image and provide a non-inverted image as the image 205 for the control panel 313.

Fig. 8B shows how the apparatus 201 of Fig. 8A and the images 203, 205 provided by the apparatus 201 appear when the driver 305 focusses their eyes to a near focal point.

In the example of Fig. 8B the environment 401 around the vehicle 301 appears out of focus. The virtual images 203, 205 displayed by the light guiding means 101 are also out of focus.

In this example the auxiliary control panel 403, which is located next to the steering wheel 309, also appears in focus.

Fig. 8C shows how the apparatus 201 of Fig. 8A and the images 203, 205 provided by the apparatus 201 appear when the driver 305 focusses their eyes to a far focal point.

In the example of Fig. 8C the environment 401 around the vehicle 301 appears in focus. The virtual images 203, 205 displayed by the light guiding means 101 are also in focus. This enables the driver 305 to switch between viewing the environment 401 and viewing the virtual images 205, 203 without having to refocus their eyes.

As the images 205 for the control panel 313 have been corrected by the second reflector 801B and the third reflector 801C the second images 205 appear in the same orientation as the images 203 provided for the HUD 311.

In this example the virtual images 203, 205 comprise the same information. In this example each of the images 203, 205 comprise the digits 4444. In other examples one of the images 203, 205 could comprise a subset of the information provided in the image. For instance, one or more of the reflectors 801 can be configured so that only part of the original image is provided to the driver 305.

The example of Figs. 8A to 8C enables light emitted from either of the surfaces of the light guiding means 101 to be used to provide images 203, 205 to the driver 305. This is an efficient use of light and prevents light emitted from one of the surfaces from being wasted.

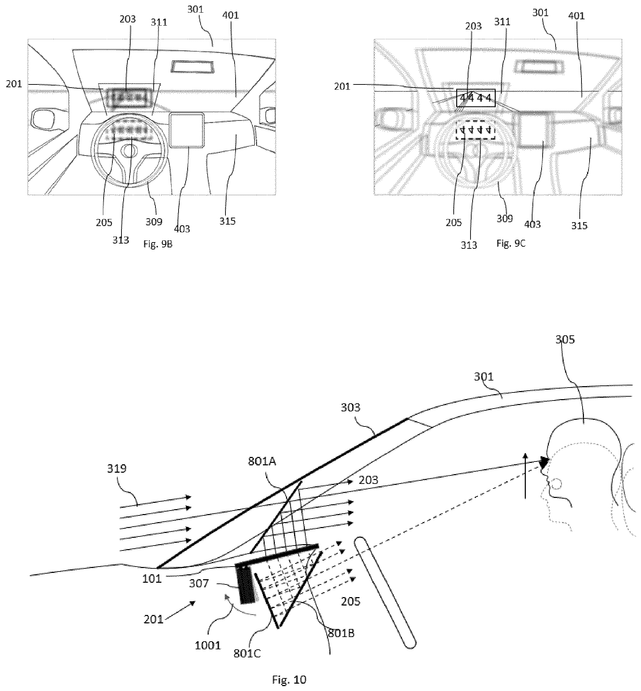

Fig. 9A shows another example apparatus 201 positioned within a vehicle 301. Figs. 9B and 9C show the example apparatus 201 in use. In this example the apparatus 201 is provided within a car. In other examples the apparatus 201 could be used in other vehicles or aircraft or cabs for vehicles.

The example apparatus 201 shown in Fig. 9A is similar to the example apparatus 201 shown in Fig. 8A in that it comprises a horizontal, or substantially horizontal, light guiding means 101 and a plurality of reflectors 801 configured to reflect images towards the driver 305.

In the example of Fig. 9A the apparatus comprises a first reflector 801A and a second reflector 801B. The first reflector 801A is configured to reflect incident beams of light from the light guiding means 101 towards the driver 305 so as to provide first images 203 for the HUD 311. In this example the first reflector 801A is provided between the light guiding means 101 and the wind shield 303. The first reflector 801A is provided above the light guiding means 101. The first reflector 801A is configured so that the first images 203 are provided at the eye level of the driver 305 or close to the eye level of the driver 305. The first reflector 801A can be as shown in Fig. 8A.

The arrangement of the second reflector 801B is different to the example shown in Fig. 8A. In this example second reflector 801B is positioned underneath the light guiding means 101 and is configured to reflect incident beams of light from the light guiding means 101 directly towards the driver 305 so as to provide second images 205 for the control panel 313. In this example there is no third reflector 801C provided between the second reflector 801B and the driver 305.

In this example the light guiding means 101 is configured so that light is emitted from both the upper surface and the lower surface. The light emitted from the upper surface is incident on the first reflector 801A and the light emitted from the lower surface is incident on the second reflector 801B. The images provided by the light emitted from the lower surface provides an inverted image compared to the images provided by the light emitted from the upper surface. As there is no third reflector 801C in the example of Fig. 9A the images 205 provided for the control panel 313 are inverted images of the images 203 provided for the HUD 311.

Fig. 9B shows how the apparatus 201 of Fig. 9A and the images 203, 205 provided by the apparatus 201 appear when the driver 305 focusses their eyes to a near focal point.

In the example of Fig. 9B the environment 401 around the vehicle 301 appears out of focus. The virtual images 203, 205 displayed by the light guiding means 101 are also out of focus.

In this example the auxiliary control panel 403, which is located next to the steering wheel 309, also appears in focus.

Fig. 9C shows how the apparatus 201 of Fig. 9A and the images 203, 205 provided by the apparatus 201 appear when the driver 305 focusses their eyes to a far focal point.

In the example of Fig. 9C the environment 401 around the vehicle 301 appears in focus. The virtual images 203, 205 displayed by the light guiding means 101 are also in focus. This enables the driver 305 to switch between viewing the environment 401 and viewing the virtual images 205, 203 without having to refocus their eyes.

As the images 205 for the control panel 313 have not been corrected by the third reflector 801C the second images 205 appear inverted compared to the images 203 provided for the HUD 311.

In this example the virtual images 203, 205 comprise the same information. In this example each of the images 203, 205 comprise the digits 4444 however the digits appear upside down in the images 205 used for the control panel 313.

The inverted images could be used to provide augmented reality information or for any other suitable purpose. For instance, in some examples the images 203, 205 could provide one or more objects and the distance between the object in the inverted image and the non-inverted image could provide an indication to the driver 305 of how close their vehicle is 301 to real word objects represented by the object in the image.

Fig. 10 shows another example apparatus 201 positioned within a vehicle 301. In this example the apparatus 201 is provided within a car. In other examples the apparatus 201 could be used in other vehicles or aircraft or cabs for vehicles.

The example apparatus 201 of Fig. 10 is similar to the example apparatus 201 shown in Fig. 8A. The apparatus 201 comprises a light guiding means 101 in a horizontal, or substantially horizontal orientation, a light engine 307, a first reflector 801A positioned above the light guiding means 101 and a second reflector 801B and a third reflector 801C positioned below the light guiding means 101.

In the example of Fig. 10 one or more of the components of the apparatus 201 are moveable. In the example of Fig. 10 the light engine 307 is moveable. The light engine 307 can be tilted as indicated by the arrow 1001. The tilting of the light engine 307 enables the light engine 307 to be moved between different angular positions. This can change the angle at which beams of light enter the light guiding means 101. This can change the path of the light beams through the light guiding means 101 and provide a corresponding change in the angle at which the beams of light exit the light guiding means 101. This can therefore change the position of the exit pupil and the location at which the images 203, 205 are provided.

In other examples other components of the apparatus 201 could be moveable. For example, one or more of the reflectors 801 could be configured to be tilted or moved laterally or moved in any other suitable direction. In some examples the light guiding means 101 could be configured so that it can be moved. For example, it could be tilted or moved in a lateral direction or in any other suitable direction.

The moveable components can be configured to enable both the positions of both the first images 203 and the second images 205 to be adjusted at the same time. In other examples the moveable components can be configured to enable the positions of one of the first images 203 and the second images 205 to be adjusted without affecting the position of the other.

In some examples the adjusting of the positions of the components can also change the positions of content within the images. However, this can be accounted for by adjusting the images provided by the light engine 307.

The adjusting of the position of the images can enable the apparatus 201 to be adjusted to account for drivers 305 of different heights or for any other suitable purpose.

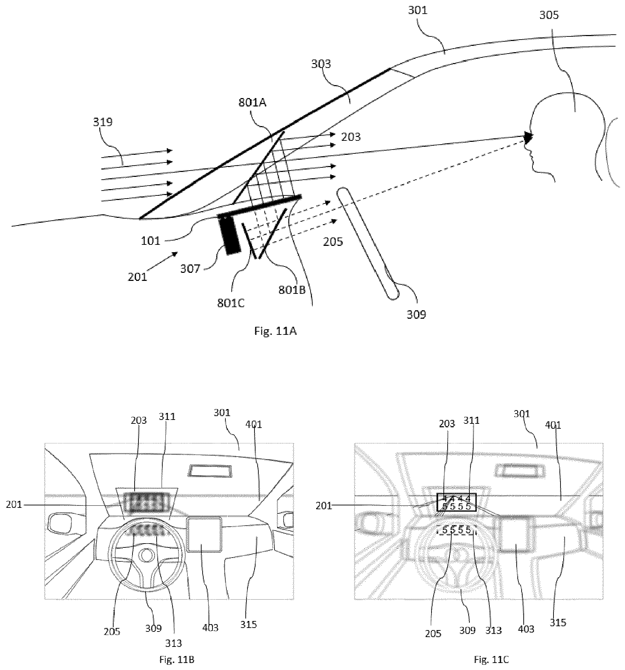

Fig. 11A shows another example apparatus 201 positioned within a vehicle 301. Figs. 11B and 11C show the example apparatus 201 in use. In this example the apparatus 201 is provided within a car. In other examples the apparatus 201 could be used in other vehicles or aircraft or cabs for vehicles.

The example apparatus 201 of Fig. 11A is similar to the example apparatus 201 shown in Fig. 8A. The apparatus 201 comprises a light guiding means 101 in a horizontal, or substantially horizontal orientation, a light engine 307, a first reflector 801A positioned above the light guiding means 101 and a second reflector 801B and a third reflector 801C positioned below the light guiding means 101. In this example the second reflector 801B and the third reflector 801C are sized so that only part of the image is reflected towards the driver 305.

Fig. 11B shows how the apparatus 201 of Fig. 11A and the images 203, 205 provided by the apparatus 201 appear when the driver 305 focusses their eyes to a near focal point.

In the example of Fig. 11B the environment 401 around the vehicle 301 appears out of focus. The virtual images 203, 205 displayed by the light guiding means 101 are also out of focus.

In this example the auxiliary control panel 403, which is located next to the steering wheel 309, also appears in focus.

Fig. 11C shows how the apparatus 201 of Fig. 11A and the images 203, 205 provided by the apparatus 201 appear when the driver 305 focusses their eyes to a far focal point.

In the example of Fig. 11C the environment 401 around the vehicle 301 appears in focus. The virtual images 203, 205 displayed by the light guiding means 101 are also in focus. This enables the driver 305 to switch between viewing the environment 401 and viewing the virtual images 205, 203 without having to refocus their eyes.

In this example the virtual images 203 provided for the HUD 311 comprise additional information that is not comprised within the virtual images 205 provided for the control panel 313. The virtual images 205 provided for the control panel 313 comprise a subset of the information comprised within the virtual images 203 provided for the HUD 311. In the example of Figs. 11A to 11C the virtual images 205 provided for the control panel 313 comprise the lower part of the virtual images 203 provided for the HUD 311. In this example the virtual images 203 provided for the HUD 311 comprise the digits 4444 and the digits 5555 whereas the virtual images 205 provided for the control panel 313 only comprise the digits 5555.

The use of the digits in the images is shown of illustrative purposes. In other examples the different parts of the first image 203 could comprise different types of information. For instance, the lower part of the image 203 could comprise control information such as the speed of the vehicle 301 or any other suitable information. This information can be repeated in the images 205 used for the control panel 313. The upper part of the image 203 could comprise augmented reality information that wouldn't be used in the control panel 313. The augmented reality images could comprise information displayed so that it appears to overlay real world objects or any other suitable type of information.

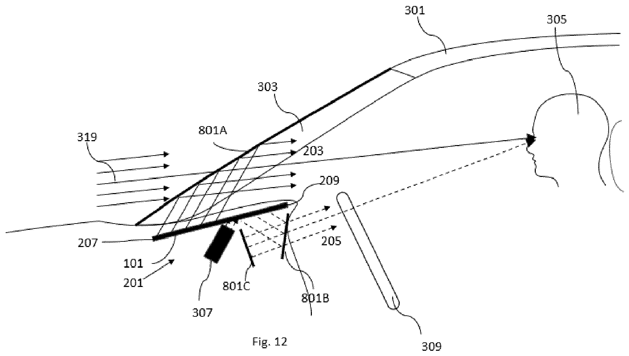

Fig. 12 shows another example apparatus 201 positioned within a vehicle 301. Figs. 11B and 11C show the example apparatus 201 in use. In this example the apparatus 201 is provided within a car. In other examples the apparatus 201 could be used in other vehicles or aircraft or cabs for vehicles.

The example apparatus 201 of Fig. 12 is similar to the example apparatus 201 shown in Fig. 11A. The apparatus 201 of Fig. 12 comprises a light guiding means 101 in a horizontal, or substantially horizontal orientation, a light engine 307, and a second reflector 801B and a third reflector 801C positioned below the light guiding means 101. In this example the second reflector 801B and the third reflector 801C are sized so that only part of the image is reflected towards the driver 305.

This example apparatus 201 differs from the example shown in Fig. 11A because in this example the windshield 303 is used as the first reflector 801A. The windshield 303 is configured so that beams of light from the light guiding means 101 are incident on the windshield 803 and reflected from the windshield 803 towards the driver 305.

In the example of Fig. 12 the light guiding means 101 can be configured so that the beams of light from the light guiding means 101 are incident on the windshield 803. In this example the light guiding means 101 comprises an in-coupling diffractive means in the centre of the light guiding means 101. The light engine 307 is positioned adjacent to the in-coupling diffractive means. A first portion 207 of the light guiding means 101 is provided to the rear of the light engine 307 to provide image 203 that can be reflected from the windshield 303 the second portion 209 is provided in front of the light engine 307 and configured to provide the second images 205 that are reflected from the second reflector 801B and the third reflector 801C.

Other configurations for the light guiding means 101 could be used in other examples of the disclosure. For instance, in some examples the light guiding means 101 could be curved to compensate for reflection distortions caused by the windshield 303. In such cases the second reflector 801B and the third reflector 801C could also be shaped to provide counter-compensation for the curvature of the light guiding means 101.

The images viewed by the driver 305 in the example of Fig. 12 would be similar to the images shown in Figs. 11B and 11C.

Variations to the apparatus 201 shown in Figs. 2 to 12 could be used in other examples of the disclosure. For instance, in some examples the apparatus 201 can be configured so that the images 203 provided by the HUD 311 are brighter than the images provided by the control panel 313. The difference in brightness could be achieved through the configuration of the light guiding means 101. For example, the light guiding means 101 can be configured so that a smaller amount of light is provided to the second portion 209 than to the first portion 207. In other examples optical components such as lenses, Fresnel lenses, transmissive or reflective color filters, or transmissive or reflective polarization filters could be used.

In the examples shown in Figs. 2 to 12 the same images 203, 205, or parts of the same images 203, 205 are used for both the HUD 311 and the control panel 313. In other examples different images 203, 205 could be used for the HUD 311 and the control panel 313. In such examples the apparatus 201 could comprise a plurality of light engines 307 where different light engines 307 are configured to provide the different images 203, 205.

Examples of the disclosure provide for an apparatus 201 that can be used to provide images 203, 205 both for a HUD 311 and for a control panel 313. This is an efficient way to provide a plurality of different images for different purposes. The use of the same apparatus 201 to provide images 203, 205 both for a HUD 311 and for a control panel 313 can also enable different form factors and configurations for dashboards 315 to be used within a vehicle 301.

In some examples the light guiding means 101 can be configured so that the virtual images are only visible to the driver 305 of the vehicle. This can enable the apparatus 201 to be used to display personal or private information to the driver 305.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Explicitly indicate that features from different examples (e.g. different methods with different flow charts) can be combined, to

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising:
at least one light guiding means comprising at least; in-coupling diffractive means configured to in-couple one or more input beams of light into the light guiding means from a light engine, expanding means configured to expand the one or more input beams of light, and out-coupling diffractive means configured to out-couple the one or more expanded beams of light from the light guiding means;
wherein the at least one light guiding means is configured to provide a first virtual image in a first location for a head-up display and is configured to provide a second virtual image in a second location for a control panel.

2. An apparatus as claimed in claim 1 wherein the at least one light guiding means comprises a first portion configured to provide the first virtual images for the head-up display and a second portion configured to provide the second virtual images for the control panel.

3. An apparatus as claimed in claim 2 wherein the first portion of the at least one light guiding means comprises a first expanding means and a first out-coupling diffractive means and the second portion of the at least one light guiding means comprises a second expanding means and a second out-coupling diffractive means.

4. An apparatus as claimed in any of claims 2 to 3 wherein the at least part of the at least one light guiding means is transparent and is provided overlaying at least part of a control panel.

5. An apparatus as claimed in claim 4 wherein at least one light guiding means is configured to display virtual images at a longer focal distance than the focal distance of images on the control panel and/or a focal distance to the control panel.

6. An apparatus as claimed in any preceding claim wherein the apparatus comprises one or more moveable components configured to enable a position of the first virtual image and/or the second virtual image provided by the apparatus to be adjusted.

7. An apparatus as claimed in any preceding claim comprising a plurality of light guiding means arranged in a stacked configuration.

8. An apparatus as claimed in any preceding claim comprising at least two reflectors where a first reflector is configured to reflect images from the light guiding means to provide images for the head-up display and a second reflector is configured to reflect images from the light guiding means to provide images for the control panel.

9. An apparatus as claimed in claim 8 wherein the apparatus is configured to enable a windshield to be used as a first reflector.

10. An apparatus as claimed in any preceding claim wherein the apparatus comprises a light engine and the apparatus is configured so that the same light engine provides images both for the head-up display and the control panel.

11. An apparatus as claimed in any preceding claim wherein the second virtual image and the first virtual image comprise a shared region of an image.

12. A module, a device, a vehicle or cab for a vehicle comprising an apparatus as claimed in any preceding claim.
